# EUROPEAN PATENT SPECIFICATION

(11) **EP 0 826 630 B1**
(45) Date of publication and mention of the grant of the patent: **05.12.2001**
(21) Application number: 97306754.9
(22) Date of filing: 02.09.1997
(51) Int. Cl.: C01B 33/20, C03B 1/02, C03C 1/00, C03C 1/02

(54) **Method of producing synthethic silicates and use thereof in glass production**
Verfahren zur Herstellung von synthetischen Silicaten und deren Verwendung für die Glasherstellung
Procédé pour la fabrication de silicates synthétiques et leur utilisation pour la fabrication de verre

(30) Priority: 03.09.1996 US 708246
(43) Date of publication of application: 04.03.1998
(73) Proprietor: MINERALS TECHNOLOGIES INC., New York, New York 10174-1901 (US)
(72) Inventor: Fairchild, George Henry, Bethlehem, PA 18017 (US); Hockman, John Albert, Easton, PA 18042-3113 (US)
(74) Representative: Bawden, Peter Charles

(56) References cited:
- DD-A- 121 095
- DD-A- 141 015
- DD-A- 141 512
- DD-A- 159 987
- DE-A- 2 362 984
- US-A- 5 004 706
- SOVIET INVENTIONS ILLUSTRATED Section Ch, Week 8341 Derwent Publications Ltd., London, GB; Class L02, AN 83-787986 XP002056040 & SU 981 217 A (AS ARMN GEN INORG) , 15 December 1982
- SOVIET INVENTIONS ILLUSTRATED Section Ch, Week 8217 Derwent Publications Ltd., London, GB; Class L01, AN 82-34594E XP002056041 & SU 823 285 B (EREV INORG MAT CHEM) , 23 April 1981
- SOVIET INVENTIONS ILLUSTRATED Section Ch, Week 8406 Derwent Publications Ltd., London, GB; Class L01, AN 84-034855 XP002056269 & SU 340 257 A (ROCK SILICATE RES) , 7 May 1983
- DATABASE WPI Section Ch, Week 7942 Derwent Publications Ltd., London, GB; Class A60, AN 79-76846b XP002056270 & SU 644 731 A (AS ARMN GEN INORG) , 30 January 1979
- DATABASE WPI Section Ch, Week 8104 Derwent Publications Ltd., London, GB; Class L02, AN 81-04830D XP002056042 & JP 55 149 122 A (TOKUYAMA SODA KK) , 20 November 1980

## Description

The present invention relates to glass making compositions and methods. More particularly, the present invention relates to a calcium silicate precursor material made from calcium oxides and magnesium oxides, water and sodium silicates. Such material is particularly useful in glass making and affords using lower temperatures with less volatiles than previously.

### BACKGROUND OF THE INVENTION

Glass can be produced from glass formers, which can be theorized under the random-network theory of glass as material having heavy cation - oxygen bond strengths greater than about 335 kilo Joules per mole. Typical formers are oxides such as B₂O₃, SiO₂, GeO₂, P₂O₅, As₂O₅, P₂O₃, As₂O₃, Sb₂O₃, V₂O₅, Sb₂O₅, Nb₂O₅, and Ta₂O₅. The fluoride BeF₂ also qualifies. Additional components can be mixed with glass formers to provide various effects. These components include glass intermediates, having bond strengths of about 250-350 kilo-Joules/mole, and which may or may not become part of the network; and glass modifiers, having bond strengths of less than about 250 kilo Joules per mole, and which do not become part of the network. Typical modifiers are oxides of gallium, magnesium, lithium, zinc, calcium, sodium and potassium. Other formers, intermediates and modifiers are known, as illustrated in "GLASS", Kirk-Othmer Encyclopedia of Chemical Technology, Vol. 12, pp 555 + (1994).

One form of glass is a silicate system containing modifiers and intermediates. Such silicates have a network of silicon to oxygen to silicon bonds. Use of a modifier, such as sodium oxide, can cleave these bonds by forming a silicon to oxygen to terminal sodium linkage. Other modifiers can be used. Such modifiers can make the glass more fluid, decrease resistivity, increase thermal expansion, lower chemical durability or increase flux.

Such sodium silicates have uses for adhesives, cleaners, desiccants, abrasives, cement deflocculants, and surface coatings.

The predominate glass produced is soda-lime glass. Such soda-lime glasses can involve mixtures of alkali and alkali earths. These glasses can be produced using oxides of sodium, calcium, silicon, magnesium, aluminum, barium and potassium.

Most glass is manufactured by a process in which raw materials are converted at high temperatures to a homogeneous melt that is then formed. The raw materials used are typically sand, as the source of silicon; limestone, as the source of calcium and magnesium; and soda ash or caustic soda, as the source of sodium. The limestone is typically a high calcium limestone (95% calcite, CaCO₃), aragonite mineral, or a dolomitic limestone (mixture of dolomite, CaMg(CO₃)₂, and calcite). The soda ash (sodium carbonate, Na₂CO₃) can be a Solvay process product or mineral deposit. Typical manufacturing processes involve the batch mixing of sand, soda ash, limestone and other materials at elevated temperatures above 1000°C.

There is a continued need for new processes and materials which facilitate the production of glass and which provide energy and material savings.

### RELATED ART

U.S. Patent No. 5,004,706 discloses a method of molten glass wherein silica is heated with a batch component comprising a sodium alkaline earth silicate which includes a major portion of the sodium in the resultant molten glass. The patent also discloses a batch component for use in glass manufacture, comprising sodium calcium silicate, and, optionally, sodium magnesium silicate. A method for producing a batch component comprising sodium calcium silicate is also disclosed, comprising heating a mixture of a source of sodium oxide, a source of silica, and either a source of calcium silicate or a source of calcium oxide at a temperature of greater than about 800°C., with a Na₂O, CaO, and SiO₂ molar ratio of 1:1:1. The resulting batch components can be preheated without melting prior to mixing and feeding the furnace.

U.S. Patent No. 4,920,080 discloses a method of making glass in which silica is reacted with sodium carbonate to form sodium silicate as a preliminary step. The resulting sodium silicate is combined with a calcium carbonate - containing batch material which has been preferably calcined to release carbon dioxide prior to contacting with the sodium silicate. The patent suggests that the process maximizes the recovery of waste heat from glass melting and that the resulting batch materials are substantially free of carbon dioxide which minimizes gaseous inclusions in the glass.

U.S. Patent No. 4,023,976 discloses an improved process for making glass in which a glass batch is mixed with a binder, aged, compacted, and compressed into briquettes, which are heated to partially react the contents of the batch in a prereaction stage. This process minimizes segregation and non-uniformity in the glass batch, and reduces the operating temperature of the glass furnace.

U.S. Patent No. 3,883,364 discloses a dust-free granular alkaline earth carbonate material particularly suited for feed stock for glass furnaces. The process for preparing the granular material involves combining a freshly prepared aqueous slurry of alkaline earth carbonate with a solution of alkali silicate, drying the slurry and sintering at temperatures of about 700-900°C., thereby converting the aqueous slurry solids to a dense material which can be ground to a dust-free, free flowing form suitable for use as a feed stock in glass furnaces.

U.S. Patent No. 3,967,943 discloses a method of improving glass batch melting by using sodium silicate water solution as a batch ingredient to supply from about 1% to about 10% of the total Na₂O content, with conventional sodium-containing batch materials supplying the bulk of the Na₂O content. The patent suggests that the addition of sodium silicate water solution enables a lower temperature and/or less fuel to be used in melting, results in lower dusting, and reduces the incidence of glass inhomogeneities or defects.

### SUMMARY

The present invention provides a method of producing a calcium silicate precursor material. The method is advantageous in providing material useful in glass making from the reaction of calcium oxides and magnesium oxides, water and sodium silicates. The glass formation is performed at a lower temperature than usual and performed with a lower amount of volatile gas release. Less cristobalite formation in the glass occurs. The method embodies the step of admixing a slaked source of calcium and a soluble silicate to produce a calcium silicate precursor material. This precursor material optionally contains free water, which can be residual from the slaking process for producing the slaked source of calcium. The method further comprises mixing the calcium silicate precursor material and a source of silica to produce a glass product.

### EMBODIMENTS OF THE PRESENT INVENTION

One embodiment of the present invention is a method of producing a molten glass comprising the step of admixing a slaked source of calcium and a soluble silicate to produce a calcium silicate precursor material. This precursor material optionally contains free water, which can be residual from the slaking process for producing the slaked source of calcium. The method further comprises mixing the calcium silicate precursor material and a source of silica to produce a glass product.

The source of calcium can be any type of a natural or synthesized material capable of being slaked by water; that is, an oxide of calcium which reacts with water. Such sources may be natural forms of oxides of calcium or processed materials which has been ground, calcined or otherwise treated. Non-limiting examples are wollastonite (CaO•SiO₂), diopside (CaO•MgO•2SiO₂), akermanite (2CaO•MgO•2SiO₂), calcium metasilicate (CaO•SiO₂), calcined dolomite (i.e., dolomitic lime, CaO•MgO), and lime (CaO) in its various forms, e.g., quicklime, hydrated lime, hydraulic lime and high calcium lime (i.e., 95% or more active).

A preferred selection of source of calcium is dolomitic lime and high calcium lime. The calcium source can be slaked with water at ambient temperatures or pressures. Higher temperatures and pressures can be used. When more than one type of calcium source is used, the calcium sources may be mixed before, during or after slaking. The amount of water used preferably is at least a stoichmetric amount for complete slaking and can be an amount of water in excess such that the slaked source of calcium comprises an amount of free (unreacted) water.

The soluble silicate is a silicate having sufficient solubility in water to enable the silicate to react with the slaked source of calcium.

A preferred soluble silicate is a sodium silicate. Such sodium silicate can be dry or liquid and anhydrous or hydrated, preferably pentahydrated.

In addition to the source of silica, there may also be needed one or more of a source of calcium, magnesium and sodium to complete the production of glass. For instance, one or more of limestone, dolomite and soda ash materials might be used. This depends upon the desired glass composition. The use of such materials can result in the release of volatile gases, such as carbonates, in the glass production and, accordingly, use of such is desired to be minimal.

In one preferred embodiment, the sodium silicate is an anhydrous or hydrated form of a compound having the empirical formula of Na₂O• *X* SiO₂, wherein *X* ranges in value from 0.5 to 3.75; preferably, Na₂O•SiO₂, Na₂O•SiO₂•5H₂O and Na₂O·10/3SiO₂. When the sodium silicate is anhydrous, the sodium silicate is preferably admixed with the slaked source of calcium after completion of the slaking process.

The admixing of the slaked source of calcium and the soluble silicate can be performed simultaneously with or after the slaking to produce the slaked source. The proportion of the source of calcium, water for slaking and soluble silicate can be varied to produce a variety of calcium silicate precursor material. In a preferred embodiment the source of calcium is a blend of dolomitic lime and high calcium lime. The proportion of the blend can vary, preferably the weight ratio of dolomitic lime to high calcium lime ranges from about 100:1 to about 1:100, more preferably from about 4:1 to about 2:1. The preferred weight ratio of water to lime during slaking is about 10:1 to about 0.35:1, more preferably about 2.5:1 to about 1:1. The water temperature for the slaking of the calcium source is preferably from about 10°C. to about 90°C., more preferably about 20°C. to about 30°C.

The admixing of the water and the source of calcium can be in either order of one to the other or concurrent. Preferably the water is added to the source of calcium over a period of time, such as from about 5 seconds to about 2 hours, preferably about 30 seconds. The slaking time is preferably from about 1 minute to about 60 minutes, more preferably about 2.5 minutes to about 10 minutes.

The amount of the soluble silicate to be admixed with the slaked source of calcium preferably ranges in the weight ratio of soluble silicate to slaked source of calcium (dry) of from about 0.044 to about 2.2, more preferably about 0.048 to about 1.2. The time of admixing of the soluble silicate and the slaked source of calcium can preferably range from about 5 seconds to about 2 hours, more preferably about 10 seconds to about 30 seconds. The admixture of soluble silicate and slaked source of calcium is preferably treated to continued mixing of from about 5 minutes to about 2 hours, more preferably about 30 minutes to about 1 hour.

The admixing and continued mixing, if any, of the soluble silicate and the slaked source of calcium is effective to produce a calcium silicate precursor material suitable for the production of glass. When a excess of water (e.g. free water) is present, the material is in a slurry form. Depending upon the composition and type of glass to be formed using the calcium silicate precursor material, additional material can be added to the slurry during or after admixing or mixing. For instance, if additional silica is desired, a silica source, such as silica flour, can be added. Also, before such calcium silicate precursor material is used in glass production, the slurry can be treated, such as by filtering, evaporating or heating, to remove at least a portion of the free water. For instance, the slurry could be dried at a temperature of about 110°C.

The calcium silicate precursor material can be further treated by heating at higher, temperatures, such as from about 110°C. to about 1100°C., more preferably from about 150°C. to about 700°C., even more preferably below about 300°C. The time and ramping of such heating can be varied, depending upon the desired final calcium silicate precursor material inasmuch as such heating can produce further or continued reactions.

The calcium silicate precursor material produced by the present invention can have a wide variety of one or more calcium silicate components. The variability of calcium silicate components correlates with the variability of amounts of the source of calcium, water and the soluble silicate, as well as the conditions of operating, e.g., temperatures, pressures, time, mixing, etc. The preferred calcium silicate components have the formula Na_{A}Ca_{B}(O)_{C}(OH)_{D}Si_{E}O_{F}•GH₂O wherein either C or D is zero and the other subscripted letters vary according to conditions as previously described. Table I discloses, in a non-limiting way, the possible correlations attainable between operating amounts and calcium silicate precursor material attainable.

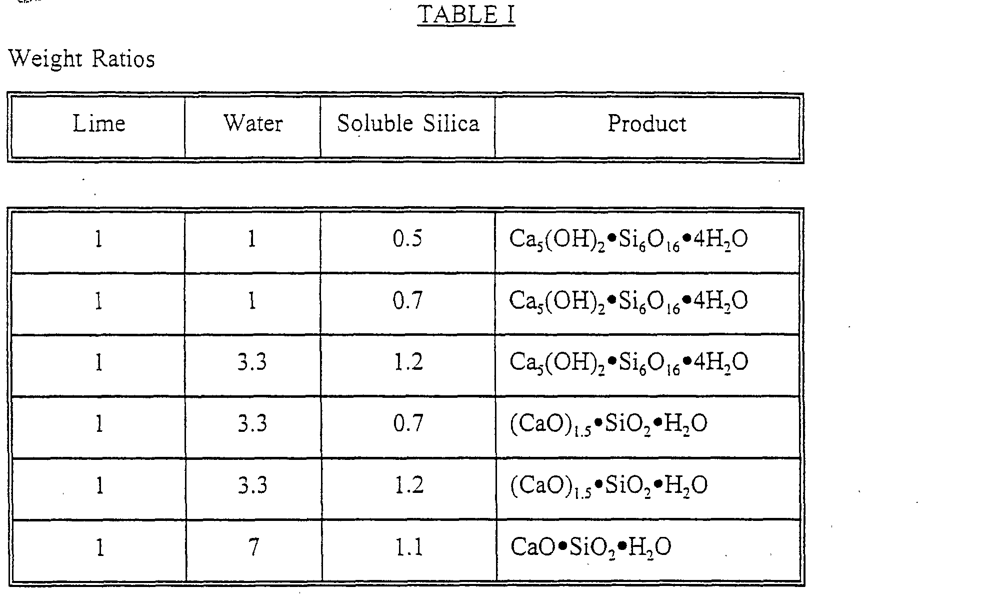

In a preferred embodiment, the calcium silicate precursor material comprises one or more components represented by the formula (CaO)ₓ•SiO₂•Y (H₂O), wherein *x* is from 5/6 to 3/2 and *Y* is not zero. More preferably *x* is 1.5 and *Y* is 1.

In another preferred embodiment, the calcium silicate precursor material comprises one or more components represented by the formula X(Na₂O)•Y(CaO)•SiO₂ and optionally comprises a compound represented by the formula W(Na₂O)•V(MgO)•SiO₂, wherein X and W independently are from 1/6 to 1/1 and Y and V independently are from 1/3 to 1/1. Preferably, the calcium silicate precursor material comprises 0.5(Na₂O)•1(CaO)•SiO₂. More preferably, the calcium silicate precursor material further comprises Na₂O•MgO•SiO₂.

In another aspect, the present invention is the setting of process variables within a set of novel process variables to attain desired results. Accordingly, the present invention can be the above-described invention wherein the proportion of the amount of calcium silicate precursor material and the amount of the source of silica is effectively controlled to reduce the temperature required to produce the molten glass within a set time. Alternatively, the proportion of the amount of calcium silicate precursor material and the amount of the source of silica is effectively controlled to reduce the time required to produce the molten glass at a set temperature. The variables which compose the foregoing variables can also be controlled. For instance, the molten glass is produced by setting variables from the set of variables consisting of the amount of slaked source of calcium, the amount of soluble silicate, the amount of free water, the amount of the source of silica, the time to produce the molten glass, and the temperature to produce the molten glass. Once a certain number of the variables have been set, the remaining are fixed in accordance with the degree of freedom. Depending upon the glass composition desired, the amounts of other sources of calcium, magnesium or sodium, such as limestone, dolomite and soda ash, may also be changed in accordance with the change of these variables.

The following examples are to illustrate, the present invention.

### EXAMPLE 1

The following is a method for producing an admixture of sodium calcium silicate and sodium magnesium silicate. The reaction takes place in a paddle mixer. A magnesium oxide and calcium oxide source consisting of 37.2 grams dolomitic lime (55.1% CaO; 42.5% MgO) and 13.2 grams high calcium lime (96% active) are premixed in the mixer. To the mixing oxides is added 210 grams of dry sodium metasilicate pentahydrate. This provides enough silicon dioxide to react with all the magnesium and calcium oxide in a 1:1 ratio. Into this dry mix is introduced 50 grams water. The slurry is allowed to mix for 30 minutes. Upon completion of the reaction the free water is removed in a kiln at 110°C. The dried material is then heated to 400°C. in a kiln. The phases formed in this reaction were confirmed by x-ray defraction (XRD) to be Na₂MgSiO₄ and Na₂Ca₂Si₂O₇.

### EXAMPLE 2

The method wherein a Na₂MgSiO₄ and Na₂Ca₂Si₂O₇ precursor is used in glass. The glass formulation followed is 74.1% SiO₂, 13.3% Na₂O, 8.6% CaO, and 4.1% MgO. The precursor material consists of 100% of the needed Na₂O, CaO and MgO, and 21% of the required SiO₂. Therefore, to 50 grams precursor material is added 67.9 grams SiO₂ as sand. A control consisting of the above mentioned glass formulation using calcium carbonate as the CaO source, magnesium carbonate as MgO source, and soda ash as the Na₂O source was created. Two groups of these mixtures were then heated to 1300°C. and 1400°C., respectively, for times of 1, 3, 6, and 12 hours. The glass samples were ground up and XRD performed on them. The % amorphous glass for these samples were as follows:

| | 1300°C. | | 1400°C. | |
|---|---|---|---|---|
| | Experimental Control | | Experimental Control | |
| 1 hour | 90 | 80 | 98 | 85 |
| 3 hours* | 98 | 90 | 98 | 85 |
| 6 hours | -- | -- | 98 | 95 |
| 12 hours | -- | -- | 99 | 99 |

| | | | | |
|---|---|---|---|---|
| *The control percentage is greater at the lower temperature at this time and temperature due to cristobalite formation dynamics. | | | | |

### EXAMPLE 3

The following is a method for synthesizing a calcium silicate hydrate. The reaction takes place in a paddle mixer. 300 grams dolomitic lime consisting of 55.1% CaO and 42.5% MgO is slaked with 500 grams water for 10 minutes in the paddle mixer. Separately, 100 grams of high calcium lime is slaked with 500 grams water for 10 minutes. Both samples are screened through a 60 mesh screen. Into the mixer is placed 400 ml of the dolomitic slake and 500 ml of the high calcium slake. To the mixing slakes is added 945 grams liquid N-type sodium silicate. The sodium silicate is introduced over 5 seconds. The sodium silicate provides enough soluble silica to react in a 1:1 molar ratio with all the MgO and CaO. The slurry is allowed to mix for 60 minutes. Upon completion of the reaction the free water is removed in a kiln at 110°C. The dried material is then heated to 400°C. in a kiln. The phase formed in this reaction was confirmed by XRD to be (CaO)_{1.5}SiO₂•H₂O along with unreacted MgO and excess sodium silicate.

### EXAMPLE 4

The method wherein a (CaO)_{1.5}SiO₂•H₂O precursor is used in glass. The glass formulation followed is 74.1% SiO₂, 13.3% Na₂O, 8.6% CaO, and 4.1% MgO. The precursor material consists of 100% of the needed CaO and MgO, 21% of the required SiO₂, and 35% of the required Na₂O. Therefore, to 20 grams precursor material is added 36.1 grams SiO₂ and 9 grams soda ash. A control consisting of the above-mentioned glass formulation using calcium carbonate as the CaO source, magnesium carbonate as the MgO source, and soda ash as the Na₂O source was created. Two groups of these mixtures were then heated to 1300°C. and 1400°C., respectively, for times of 1, 3, 6 and 12 hours. The glass samples were grounded up and XRD performed on them. The % amorphous glass for these samples were as follows:

| | 1300°C. | | 1400°C. | |
|---|---|---|---|---|
| | Experimental Control | | Experimental Control | |
| 1 hour | 95 | 80 | 98 | 85 |
| 3 hours* | 98 | 90 | 99 | 85 |
| 6 hours | -- | -- | 99 | 95 |
| 12 hours | -- | -- | 99 | 99 |

| | | | | |
|---|---|---|---|---|
| *The control percentage is greater at the lower temperature at this time and temperature due to cristobalite formation dynamics. | | | | |

## Claims

1. A method of producing a molten glass comprising (1) the step of admixing a slaked source of calcium and a soluble silicate to produce a calcium silicate precursor material, optionally containing free water, and (2) the step of admixing said calcium silicate precursor material and a source of silica to produce a molten glass product.

2. The method of Claim 1, wherein the source of calcium is dolomite, dolomitic lime, and/or high calcium lime.

3. The method of Claim 1, wherein the source of calcium is dolomitic lime and high calcium lime.

4. The method of Claim 2 or 3, wherein the slaked source of calcium is an admixture of separately slaked sources of calcium.

5. The method of any one of the preceding claims, wherein the soluble silicate is a sodium silicate.

6. The method of Claim 5, wherein the sodium silicate is an anhydrous or hydrated form of a compound having the empirical formula of Na₂O•X SiO₂, wherein X ranges in value from 0.5 to 3.75.

7. The method of Claim 6, wherein the sodium silicate is Na₂O·SiO₂, Na₂O•SiO₂•5H₂O, or Na₂O•10/3SiO₂.

8. The method of any of the preceding claims, wherein the soluble silicate is admixed after completion of the slaking of the slaked source of calcium.

9. The method of any of the preceding claims, further comprising the step of removing at least a portion of the free water present in the calcium silicate precursor material.

10. The method of any of the preceding claims, further comprising the step of treating said calcium silicate precursor material at a temperature ranging from about 150°C to about 700°C.

11. The method of Claim 1, wherein the calcium silicate precursor material comprises one or more compounds represented by the formula (CaO)ₓ•SiO₂•Y(H₂O) wherein X is from 5/6 to 3/2 and Y is not zero or of the formula X(Na₂O)•Y(CaO)•SiO₂ and optionally comprises a compound represented by the formula W(Na₂O)•V(MgO)•SiO₂, wherein X and W independently are from 1/6 to 1/1 and Y and V independently are from 1/3 to 1/1.

12. A method of producing molten glass wherein a calcium silicate precursor material comprising one or more compounds represented by the formula (CaO)ₓ•SiO₂•Y(H₂O) wherein X is from 5/6 and 3/2 and Y is not zero or of the formula X(NaO)•Y(CaO)•SiO₂ and optionally comprising a compound represented by the formula W(Na₂O)•V(MgO) •SiO₂, wherein X and W independently are from 1/6 to 1/1 and Y and V independently are from 1/3 to 1/1 is admixed with a source of silica are subjected to conditions whereby molten glass is produced.

## Patentansprüche

1. Verfahren zur Herstellung eines geschmolzenen Glases umfassend (1) den Schritt des Vormischens einer abgelöschten Kalziumquelle und eines löslichen Silikats zur Herstellung eines Kalziumsilikatvorläufermaterials, welches wahlweise freies Wasser beinhaltet, und (2) den Schritt des Zumischens des Kalziumsilikatvorläufermaterials und einer Siliziumoxidquelle zur Herstellung eines geschmolzenen Glasproduktes.

2. Verfahren nach Anspruch 1, bei dem die Quelle des Kalziums Dolomit, Dolomitkalk, und/oder Kalziumkalk ist.

3. Verfahren nach Anspruch 1, bei dem die Quelle des Kalziums Dolomitkalk und Kalk mit hohem Kalziumanteil ist.

4. Verfahren nach Anspruch 2 oder 3, bei dem die gelöschte Kalziumquelle eine Vormischung von einzeln abgelöschten Kalziumquellen ist.

5. Verfahren nach irgendeinem der vorhergehenden Ansprüche, bei dem das lösliche Silikat ein Natriumsilikat ist.

6. Verfahren nach Anspruch 5, bei dem das Natriumsilikat eine wasserfreie oder hydratisierte Form einer Verbindung mit der empirischen Formel Na₂O•XSiO₂ ist, wobei X Werte im Bereich zwischen 0,5 und 3,75 umfaßt.

7. Verfahren nach Anspruch 1, bei dem das Natriumsilikat Na₂O•SiO₂, Na₂O•SiO₂•5H₂O oder Na₂O•10/3SiO₂ ist.

8. Verfahren nach irgendeinem der vorhergehenden Ansprüche, bei dem das lösliche Silikat nach Beendigung des Ablöschens der abgelöschten Kalziumquelle zugemischt wird.

9. Verfahren nach irgendeinem der vorhergehenden Ansprüche, welches ferner den Schritt des Entfernens mindestens eines Teils des freien Wassers umfaßt, welches in dem Kalziumsilikatvorläufermaterial vorhanden ist.

10. Verfahren nach irgendeinem der vorhergehenden Ansprüche, welches ferner den Schritt der Behandlung des Kalziumsilikatvorläufermaterials bei einer Temperatur im Bereich zwischen ca. 150 °C und 700 °C umfaßt.

11. Verfahren nach Anspruch 1, bei dem das Kalziumsilikatvorläufermaterial ein oder mehrere Verbindungen umfaßt, die durch die Formel (CaO)ₓ•SiO₂•Y(H₂O), wobei X zwischen 5/6 und 3/2 liegt und Y ungleich 0 ist, oder durch die Formel X(Na₂O)•Y (CaO)•SiO₂ repräsentiert werden und wahlweise eine Verbindung umfaßt, welche durch die Formel W(Na₂O)•V(MgO)•SiO₂ repräsentiert wird, wobei X und W unabhängig voneinander zwischen 1/6 und 1/1 und Y und V unabhängig voneinander zwischen 1/3 und 1/1 liegen.

12. Verfahren zur Herstellung geschmolzenen Glases, bei dem ein Kalziumsilikatvorläufermaterial umfassend ein oder mehrere durch die Formel (CaO)ₓ•SiO₂•Y(H₂O), wobei X zwischen 5/6 und 3/2 liegt und Y ungleich 0 ist, oder durch die Formel X(Na₂O)•Y(CaO)•SiO₂ repräsentierten Verbindungen und optional eine Verbindung, die durch die Formel W(Na₂O)•V(MgO) •SiO₂ repräsentiert wird, wobei X und W unabhängig voneinander zwischen 1/6 und 1/1 und Y und V unabhängig voneinander zwischen 1/3 und 1/1 liegen, mit einer Siliziumoxidquelle vorgemischt wird und Bedingungen zur Herstellung geschmolzenen Glases unterworfen wird.

## Revendications

1. Procédé pour la production d'un verre fondu, comprenant (1) l'étape consistant à mélanger une source éteinte de calcium et un silicate soluble pour produire un matériau précurseur consistant en silicate de calcium, contenant facultativement de l'eau libre, et (2) l'étape consistant à mélanger ledit matériau précurseur consistant en silicate de calcium et une source de silice pour produire un verre fondu.

2. Procédé suivant la revendication 1, dans lequel la source de calcium est la dolomite, la chaux dolomitique et/ou la chaux à haute teneur en calcium.

3. Procédé suivant la revendication 1, dans lequel la source de calcium est la chaux dolomitique et la chaux à haute teneur en calcium.

4. Procédé suivant la revendication 2 ou 3, dans lequel la source éteinte de calcium est un mélange de sources de calcium séparément éteintes.

5. Procédé suivant l'une quelconque des revendications précédentes, dans lequel le silicate soluble est un silicate de sodium.

6. Procédé suivant la revendication 5, dans lequel le silicate de sodium est une forme anhydre ou hydratée d'un composé répondant à la formule empirique Na₂O.X SiO₂ dans laquelle X a une valeur comprise dans l'intervalle de 0,5 à 3,75.

7. Procédé suivant la revendication 6, dans lequel le silicate de sodium consiste en Na₂.SiO₂, Na₂O.SiO₂.5H₂O ou Na₂O.10/3SiO₂.

8. Procédé suivant l'une quelconque des revendications précédentes, dans lequel le silicate soluble est mélangé après achèvement de l'extinction de la source éteinte de calcium.

9. Procédé suivant l'une quelconque des revendications précédentes, comprenant en outre l'étape consistant à éliminer au moins une partie de l'eau libre présente dans le matériau précurseur consistant en silicate de calcium.

10. Procédé suivant l'une quelconque des revendications précédentes, comprenant en outre l'étape consistant à traiter le matériau précurseur consistant en silicate de calcium à une température comprise dans l'intervalle d'environ 150°C à environ 700°C.

11. Procédé suivant la revendication 1, dans lequel le matériau précurseur consistant en silicate de calcium comprend un ou plusieurs composés représentés par la formule (CaO)ₓ.SiO₂.Y(H₂O) dans laquelle X a une valeur comprise dans l'intervalle de 5/6 à 3/2 et Y n'est pas égal à zéro ou par la formule X(Na₂O).Y(CaO).SiO₂ et comprend facultativement un composé représenté par la formule W(Na₂O).V(MgO).SiO₂, formules dans lesquelles X et W ont indépendamment une valeur de 1/6 à 1/1 et Y et V ont indépendamment une valeur de 1/3 à 1/1.

12. Procédé pour la production d'un verre fondu, dans lequel un matériau précurseur consistant en silicate de calcium comprenant un ou plusieurs composés représentés par la formule (CaO)ₓ.SiO₂.Y(H₂O) dans laquelle X a une valeur de 5/6 à 3/2 et Y est non égal à zéro ou répondant à la formule X(Na₂O).Y(CaO).SiO₂ et comprenant facultativement un composé représenté par la formule W(Na₂O).V(MgO).SiO₂, formules dans lesquelles X et W ont indépendamment une valeur de 1/6 à 1/1 et Y et V ont indépendamment une valeur de 1/3 à 1/1 est mélangé à une source de silice et le mélange est soumis à des conditions permettant la production d'un verre fondu.
